Europäisches Patentamt

European Patent Office

Office européen des brevets

(19)

(11) Veröffentlichungsnummer: **0 048 014**
**B1**

(12) **EUROPÄISCHE PATENTSCHRIFT**

(45) Veröffentlichungstag der Patentschrift: **03.04.85**

(51) Int. Cl.4: **G 01 S 17/02**

(21) Anmeldenummer: **81107240.4**

(22) Anmeldetag: **14.09.81**

(54) **Messeinrichtung zur Bestimmung des Extinktionswertes von Laserentfernungsmessern.**

(30) Priorität: **16.09.80 DE 3034942**

(43) Veröffentlichungstag der Anmeldung:
**24.03.82 Patentblatt 82/12**

(45) Bekanntmachung des Hinweises auf die
Patenterteilung:
**03.04.85 Patentblatt 85/14**

(84) Benannte Vertragsstaaten:
**AT BE CH DE FR GB IT LI LU NL SE**

(56) Entgegenhaltungen:
**DE-A-1 947 558**
**DE-A-2 809 812**
**DE-A-2 834 821**

(73) Patentinhaber: **Siemens Aktiengesellschaft**
**Berlin und München Wittelsbacherplatz 2**
**D-8000 München 2 (DE)**

(72) Erfinder: **Grage, Ludger, Ing.grad.**
**Frühlingstrasse 46**
**D-8031 Eichenau (DE)**
Erfinder: **Ryseck, Werner, Dipl.-Phys**
**Am Stichgartl 2a**
**D-8042 Oberschleissheim (DE)**

Courier Press, Leamington Spa, England.

EP 0 048 014 B1

## Beschreibung

Die Erfindung betrifft eine Meßeinrichtung zur Bestimmung des Extinktionswertes von Laserentfernungsmessern, mit einer in den optischen Strahlengang eingefügten, optische Dämpfungsfilter enthaltenden Kammer, einer optischen Abschirmung für den ungedämpften Laserstrahl und mindestens einer Lichtwellenleitung bestimmter Länge.

Für verschiedene Anwendungen, z.B. für militärische Anwendungen, werden zur genauen und schnellen Ermittlung der Entfernung eines Objektes, z.B. der Entfernung zwischen einem Zielobjekt und einer Waffe, bereits in großem Umfang Laserentfernungsmesser eingesetzt. Die Reichweite von Laserentfernungsmessern hängt einmal von den eigenen Leistungsdaten und zum anderen von nicht gerätespezifischen, in der Praxis kaum ermittelbaren Parametern ab. Eine objektive Reichweitenbestimmung durch Vermessung natürlicher Ziele im Celände und damit auch ein Vergleich von verschiedenen Laserentfernungsmessern untereinander ist so nicht möglich. Ebenso ist es sehr schwierig, die Einzeldaten von Laserentfernungsmessern, wie z.B. Ausgangsleistung und Empfängerempfindlichkeit, mit genügender Genauigkeit bei vertretbarem Meßmittelaufwand zu bestimmen.

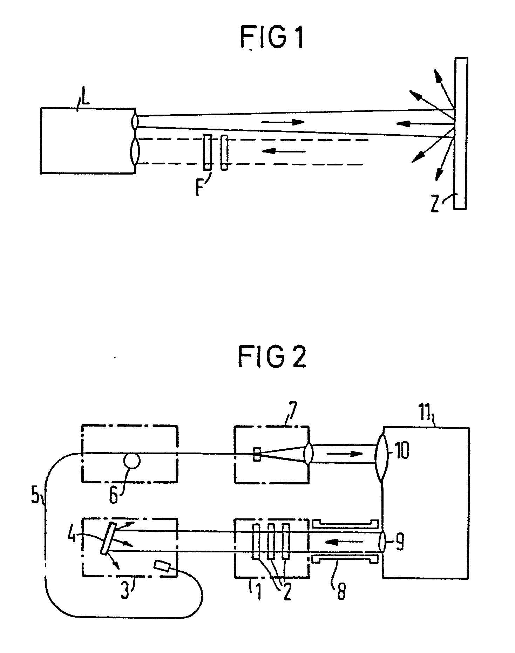

Bischer wurde dieses Problem durch die sogenannte Extinktionsmessung gelöst. Die Bestimmung des Extinktionswertes kann z.B. anhand einer in Fig. 1 schematisch dargestellten Anordnung folgendermaßen durchgeführt werden. In einem definierten Abstand von einem Laserentfernungsmesser L wird eine große Zieltafel Z mit bekannten Streueigenschaften aufgestellt. Dieser Abstand wird unter Einfügung von kalibrierten Dämpfungsfiltern F in einem optischen Strahlengang des Laserentfernungsmessers gemessen. Als Extinktionswert ist z.B. der Dämpfungswert in d.B. definiert, bei dem noch eine 50%ige Entdeckungswahrscheinlichkeit erzielt wird. Diese Meßmethode hat insbesondere folgende Nachteile. Durch atmosphärische Einwirkung wird eine Änderung der Reflexionseigenschaften der Zieltafel verursacht. Ferner müssen, insbesondere bei Verwendung YAC-Nd-Lasern, bei Vermessung natürlicher Ziele im Gelände besondere Schutz- und Sicherheitsmaßnahmen gegen Augengefährdung getroffen werden (Gebietsabsperrung). Weitere Nachteile dieser Meßmethode bestehen darin, daß relativ viel Platz benötigt wird und die Messung nur bei gutem Wetter durchgeführt werden kann.

Aus der DE—A—2 809 812 ist ein passiver optischer Entfernungsbereichsimulator mit einem Adapter zum mechanischen Ankoppeln an ein optisches Radarsystem bekannt, welches einen Lichtstrahl vorgegebener Frequenz aussendet und reflektierte Lichtstrahlung sowie gegebenenfalls Fremdlichtstrahlung empfängt. Der bekannte Simulator ermöglicht eine Überprüfung und Justierung von optischen Radar- bzw. Lasersystemen und besitzt ein als optische Abschirmung für den ungedämpften Laserstrahl wirkendes Gehäuse, in dem ein Schwächungsglied vorgesehen ist, welches alle Strahlen aus dem und zu dem zu überprüfenden System dämpft. Außerdem ist in den Lichtweg ein in einer Kammer angeordnetes Dämpfungsglied zur Feineinstellung eingeschaltet, welches aus zwei gegeneinander geneigten Glasplatten beseht. Als optische Verzögerungsleitung ist eine auf eine Spule gewickelte lichtleitende Faser bestimmter Länge mit einem Reflektor an einem Ende vorgesehen, um ein Echosignal zu erhalten, mit dem die Entfernungskalibrierung eines optischen Radarsystems festgestellt werden kann.

Der Erfindung liegt nun die Aufgabe zugrunde, eine Maßeinrichtung zur Bestimmung des Extinktionswertes von Laserentfernungsmessern zu schaffen, die bei möglichst geringem Aufwand vor allem eine objektive, von äußeren Einflüssen unabhängige und möglichst genaue Bestimmung der für die Reichweite eines Laserentfernungsmessers maßgeblichen Leistungsdaten bei gleichzeitigem vollem Schutz genen gefährliche Laserstrahlung ermöglicht.

Diese Aufgabe wird bei einer Meßeinrichtung der eingangs genannten Art gemäß der Erfindung dadurch gelöst, daß eine Streueinrichtung mit einer das Laserlicht des Sendestrahls diffus streuenden Streuscheibe vorgesehen ist, in deren Streubereich sich das eine Ende der Lichtwellenleitung befindet, und daß das andere Ende der Lichtwellenleitung mittels einer optischen Koppeleinrichtung in den optischen Strahlengang des Laserempfängers eingekoppelt ist.

Bei einer Messung des Extinktionswertes mit einer erfindungsgemäßen Meßeinrichtung wird der vom Lasersender ausgesandte Lichtimpuls auf die in einer Streueinrichtung angeordnete Streuscheibe gelenkt und an dieser diffus gestreut. Im Streubereich befindet sich das eine Ende einer Lichtwellenleitung zur Einkopplung eines Teiles des gestreuten Laserlichtes. Nach Durchlauf des eingekoppelten Lichtimpulses durch die Lichtwellenleitung wird ein Anteil mittels der optischen Koppeleinrichtung in den Empfänger des Laserentfernungsmessers gerichtet. Der vom Laserentfernungsmesser gemessene Entfernungswert entspricht der halben Laufzeit durch die Lichtwellenleitung. Durch Erhöhung der Dämpfungswerte in der Filterkammer kann der Dämpfungswert bei 50%-iger Entdeckungswahrscheinlichkeit ermittelt werden. Der Gesamtdämpfungswert setzt sich aus dem Dämpfungswert der Meßeinrichtung ohne Filterkammer (Apparatekonstante) und der in den optischen Strahlengang eingefügten Dämpfung zusammen und stellt ein Maß für die Reichweite des vermessenen Laserentfernungsmessers dar. Diese Gesamtdämpfung kann dann auf den Extinktionswert nach der Zieltafelmethode umgerechnet werden.

Die erfindungsgemäße Meßeinrichtung ermöglicht mit geringem Aufwand die Extinktionsbestimmung von Laserentfernnungsmessern, wobei diese Messung auch in geschlossenen Räumen und ohne Gefährdung von Personen durch Laserstrahlung durchgeführt werden kann. Aus diesem Grunde ist die Extinktionswertbestimmung mit der erfindungsgemäßen Meßeinrichtung auch von äußeren Einflüssen unabhängig.

Bei einer erfindungsgemäßen Meßeinrichtung hat es sich als besonders vorteilhaft erwiesen, wenn die optische Koppeleinrichtung aus einem Kollimator mit einem Strahlenteiler besteht.

Ein besonders einfacher Aufbau einer erfindungsgemäßen Meßeinrichtung ergibt sich dadurch, daß die Filterkammer, die Streueinrichtung, die Lichtwellenleitung und die optische Koppeleinrichtung als selbständige Funktionseinheiten mit jeweils eigenem Gehäuse ausgebildet sind.

Es ist ferner auch vorteilhaft, wenn bei einer erfindungsgemäßen Meßeinrichtung die Streueinrichtung, die Lichtwellenleitung und die optische Koppeleinrichtung in einem Meßgerät mit einem eigenen Gehäuse zusammengefaßt sind. Diese Ausführungsform ist besonders dann zweckmäßig, wenn mit diesem Meßgerät, insbesondere in Verbindung mit einem Kollimator als optischer Koppeleinrichtung, auch die optischen Achsen eines Laserentfernungsmeßsystems vermessen und justiert werden. Das Meßgerät ermöglicht dann mit einer einzigen Einrichtung sowohl die Justierung der optischen Achsen als auch die Messung des Extinktionswertes.

Ferner ist es vorteilhaft, wenn im Streubereich der Streuscheibe ein mit einer Leistungsmeßelektronik in Verbindung stehendes Fotoelement angeordnet ist. Durch eine derart ausgebildete Streueinheit ist/ein Leistungsmeßteil geschaffen, mit dessen Hilfe auch eine Kontrolle der Ausgangsleistung des Lasersenders durchgeführt werden kann.

Bei einer erfindungsgemäßen Meßeinrichtung können in die Streueinrichtung auch mehrere Lichtwellenleitungen eingekoppelt werden. So ist es vorteilhaft, wenn bei zwei Lichtwellenleitungen die zusätzliche Lichtwellenleitung eine derartige Länge aufweist, daß durch die zusätzliche Lichtwellenleitung eine einer bestimmten Meßstrecke entsprechende Differenzlänge entsteht. Durch Umleitung eines Lichtanteiles des Sendestrahles über die eine Nebenstrecke bildende zusätzliche optische Verzögerungsleitung läßt sich eine Funktionsüberprüfung der Doppelechoauswertung bzw. eine Kontrolle der Tiefenauflösung durchführen.

Im folgenden wird die erfindungsgemäße Meßeinrichtung anhand eines in der Fig. 2 schematisch dargestellten Ausführungsbeispieles näher erläutert. Dabei zeigt die Fig. 2 den Aufbau der Meßeinrichtung in Verbindung mit einem aus einem Sender 9 und einem Empfänger 10 bestehenden Laserentfernungsmesser 11. Die Meßeinrichtung besteht aus folgenden mit strichpunktierten Linien umgrenzten, ggf. in eigene Gehäuse eingebauten Funktionseinheiten: einer Filterkammer 1, einer Streueinrichtung 3, einer Lichtwellenleitung 5, einer optischen Koppeleinrichtung 7 und einer optischen Abschirmung 8.

Die Filterkammer 1 enthält mehrere optische Dämpfungsfilter 2 aus kalibrierten Farb- und/oder Filtergläsern und ist hier in den optischen Strahlengang des Lasersenders 9 eingefügt, wobei der Abstand zwischen der Filterkammer 1 und dem Lasersender 9 mittels der aus einem geschlossenen Schutztubus bestehenden optischen Abschirmung 8 überbrückt ist. Die Streueinrichtung 3 ist der Filterkammer 1 im optischen Strahlengang des Lasersenders 9 nachgeschaltet und ggf. mit der/Filterkammer mechanisch koppelbar. Die Streueinrichtung weist eine das Laserlicht des Sendestrahles diffus streuende Streuscheibe 4 auf, in deren Streubereich ein Ende einer Lichtwellenleitung 5 eingekoppelt ist. Die eine optische Verzögerungsleitung darstellende Lichtwellenleitung 5 weist eine bestimmte Länge, z.B. in einem Bereich von etwa 300 bis 900 Metern auf und ist auf eine Spule 6 aufgewickelt. Das andere Ende der Lichtwellenleitung 5 ist über die vorzugsweise von einem Kollimator mit Strahlenteiler gebildete optische Koppeleinrichtung 7 in den optischen Strahlengang des Laserempfängers 10 eingekoppelt. Streueinrichtung 3, Lichtwellenleitung 5 und optische Koppeleinrichtung 7 können in vorteilhafter Weise auch in einem selbständigen Meßgerät mit einem eigenen Gehäuse zusammengefaßt sein. Die Filterkammer 1 kann in diesem Fall dann z.B. in einem dieses Meßgerät optisch an den Laser entfernungsmesser koppelnden, als selbständige Einheit ausgebildeten optischen Adapter untergebracht werden.

In vorteilhafter nicht näher dargestellter Weiterbildung der Meßeinrichtung nach Fig. 2 können in die Streueinrichtung auch mehrere, z.B. zwei Lichtwellenleitungen eingekoppelt werden. Diese Lichtwellenleitungen können dann über einen optischen Koppler, wie er beispielsweise in der Zeitschrift "Siemens Components" 18 (1980), Heft 3, Seiten 144 bis 150 oder in den "Siemens Forschungs- und Entwicklungsberichten" Band 8 (1979) Nr. 3, Seiten 130 bis 135 angegeben ist, auf eine gemeinsame Lichtwellenleitung zusammengefaßt werden, die dann in den optischen Strahlengang des Laserempfängers eingekoppelt wird. Dabei ist es vorteilhaft, wenn die von der zweiten Lichtwellenleitung gebildete zusätzliche optische Verzögerungsleitung gegenüber der ersten Lichtwellenleitung eine derartige unterschiedliche Länge hat, daß durch die zusätzliche Nebenstrecke eine einer bestimmten Meßstrecke entsprechende Differenzlänge entsteht. Außerdem kann in den Streubereich der Streuscheibe noch ein mit einer Leistungsmeßelektronik in Verbindung stehendes Fotoelement, z.B. eine Fotodetektor eingefügt werden. Mit einer derartigen Meßeinrichtung können in vorteilhafter Weise noch zusätzliche Messungen durchgeführt werden.

**Patentansprüche**

1. Meßeinrichtung zur Bestimmung des Extinktionswertes von Laserentfernungsmessern, mit einer in den optischen Strahlengang eingefügten, optische Dämpfungsfilter (2) enthaltenden Kammer (1), einer optischen Abschirmung (8) für den ungedämpften Laserstrahl und mindestens einer Lichtwellenleitung (5) bestimmter Länge, dadurch gekennzeichnet, daß eine Streueinrichtung (3) mit einer das Laserlicht des Sendestrahls diffus streuenden Streuscheibe (4) vorgesehen ist, in deren Streubereich sich das eine Ende der Lichtwellenleitung (5) befindet, und daß das andere Ende der Lichtwellenleitung (5) mittels einer optischen Koppeleinrichtung (7) in den optischen Strahlengang des Laserempfängers (10) eingekoppelt ist.

2. Meßeinrichtung nach Anspruch 1, dadurch gekennzeichnet, daß die optische Abschirmung (8) zwischen dem Lasersender (9) und der in den optischen Strahlengang des Lasersenders eingefügten Filterkammer (1) angeordnet ist.

3. Meßeinrichtung nach Anspruch 1 oder 2, dadurch gekennzeichnet, daß die Streueinrichtung (3) der in den optischen Strahlengang des Lasersenders (9) eingefügten Filterkammer (1) nachgeschaltet ist.

4. Meßeinrichtung nach einem der Ansprüche 1 bis 3, dadurch gekennzeichnet, daß die Dämpfungsfilter (2) aus kalibrierten Farb- und/oder Filtergläsern bestehen.

5. Meßeinrichtung nach einem der vorhergehenden Ansprüche, dadurch gekennzeichnet, daß die optische Koppeleinrichtung (7) aus einem Kollimator mit einem Strahlenteiler besteht.

6. Meßeinrichtung nach einem der vorhergehenden Ansprüche, dadurch gekennzeichnet, daß die Filterkammer (1), die Streueinrichtung (3), die Lichtwellenleitung (5) und die optische Koppeleinrichtung (7) als selbständige Funktionseinheiten mit jeweils eigenem Gehäuse ausgebildet sind.

7. Meßeinrichtung nach einem der Ansprüche 1 bis 5, dadurch gekennzeichnet, daß die Streueinrichtung (3), die Lichtwellenleitung (5) und die optische Koppeleinrichtung (7) in einem Meßgerät mit einem eigenen Gehäuse zusammengefaßt sind.

8. Meßeinrichtung nach einem der vorhergehenden Ansprüche, dadurch gekennzeichnet, daß die optische Abschirmung (8) aus einem geschlossenen Schutztubus besteht.

9. Meßeinrichtung nach einem der vorhergehenden Ansprüche, dadurch gekennzeichnet, daß im Streubereich der Streuscheibe (4) ein mit einer Leistungsmeßelektronik in Verbindung stehendes Fotoelement angeordnet ist.

10. Meßeinrichtung nach einem der vorhergehenden Ansprüche, dadurch gekennzeichnet, daß die Lichtwellenleitung (5) auf einer Spule (6) aufgewickelt ist.

11. Meßeinrichtung nach einem der vorhergehenden Ansprüche, dadurch gekennzeichnet, daß bei mehreren in die Streueinrichtung (3) eingekoppelten Lichtwellenleitungen diese unterschiedliche Längen aufweisen.

12. Meßeinrichtung nach Anspruch 11, dadurch gekennzeichnet, daß die Lichtwellenleitungen über einen optischen Koppler auf eine gemeinsame Lichtwellenleitung zusammengefaßt sind.

13. Meßeinrichtung nach Anspruch 11 oder 12, dadurch gekennzeichnet, daß bei zwei Lichtwellenleitungen die zusätzliche Lichtwellenleitung eine derartige Länge aufweist, daß durch die zusätzliche Lichtwellenleitung eine einer bestimmten Meßstrecke entsprechende Differenzlänge entsteht.

**Revendications**

1. Dispositif de mesure pour déterminer le coefficient de l'extinction de télémètres à laser, comportant une chambre (1) insérée dans la trajectoire optique des rayons et contenant des filtres optiques d'atténuation (2), un écran optique (8) pour le rayon laser non atténué et au moins un guide d'onde de lumière (5) de longueur déterminée, caractérisé par le fait qu'il est prévu un dispositif de dispersion (3) avec un disque de dispersion (4) dispersant de façon diffuse la lumière laser du rayon émis et dans la zone de dispersion duquel se situe l'une des extrémités du guide d'onde de lumière (5), et que l'autre extrémité du guide d'onde de lumière (5) est couplée, à l'aide d'un dispositif optique de couplage (7), dans la trajectoire optique du récepteur laser (10).

2. Dispositif de mesure selon la revendication 1, caractérisé par le fait que l'écran optique (8) est disposé entre l'émetteur laser (9) et la chambre à filtres (9) insérée dans la trajectoire des rayons de l'émetteur laser.

3. Dispositif de mesure selon la revendication 1 ou 2, caractérisé par le fait que le dispositif de dispersion (3) est monté en aval de la chambre à filtres (1) insérée dans la trajectoire du rayon laser de l'émetteur laser (9).

4. Dispositif de mesure selon l'une des revendications 1 à 3, caractérisé par le fait que les filtres d'atténuation (2) sont constitués par des verres colorés et/ou par des verres formant filtres.

5. Dispositif de mesure selon l'une des revendications précédentes, caractérisé par le fait que le dispositif optique de couplage (7) est constitué par un collimateur avec un diviseur de rayons.

6. Dispositif de mesure selon l'une des revendications précédentes, caractérisé par le fait que la chambre à filtres (1), le dispositif de dispersion (3), le guide d'onde de lumière (5) et le dispositif optique de couplage (7) sont réalisés sous la forme d'unités de fonctionnement individuelles, avec respectivement un boîtier.

7. Dispositif de mesure selon l'une des revendications 1 à 5, caractérisé par le fait que le dispositif de dispersion (3), le guide d'onde de lumière (5) et le dispositif optique de couplage (7) sont rassemblés en un appareil de mesure avec un boîtier propre.

8. Dispositif de mesure selon l'une des revendications précédentes, caractérisé par le fait que l'écran optique (8) est constitué par un tube de protection fermé.

9. Dispositif de mesure selon l'une des revendications précédentes, caractérisé par le fait que dans la zone de dispersion du disque de dispersion (4) est disposée un élément photoélectrique en liaison avec une électronique de mesure de la puissance.

10. Dispositif de mesure selon l'une des revendications précédentes, caractérisé par le fait que le guide d'onde de lumière (5) est enroulé sur une bobine (6).

11. Dispositif de mesure selon l'une des revendications précédentes, caractérisé par le fait que dans le cas de plusieurs guides d'onde de lumière couplés dans le dispositif de dépression (3), ceux-ci ont des longueurs différentes.

12. Dispositif de mesure selon l'une des revendications précédentes, caractérisé par le fait que les guides d'onde de lumière sont rassemblés à l'aide d'un compteur optique en un guide d'onde de lumière commun.

13. Dispositif de mesure selon la revendication 11 ou 12, caractérisé par le fait que dans le cas de deux guides d'onde de lumière, le guide d'onde de lumière supplémentaire possède une longueur telle que par le guide d'onde de lumière supplémentaire, il se forme une différence de longueur qui correspond à une voie de mesure déterminée.

**Claims**

1. Measuring apparatus for determining the extinction coefficient of laser range-finders, comprising a chamber (1) which contains optical attenuation filters (2) and is inserted into the optical beam path, an optical shield (8) for the unattenuated laser beam and at least one light waveguide (5) of specific length, characterised in that a scattering device (3) is provided, with a scattering disk (4) which diffusely scatters the laser light of the transmitted beam and in whose scatter region one end of the light waveguide (5) is located; and that the other end of the light waveguide (5) is coupled into the optical beam path of the laser receiver (10) by means of an optical coupling device (7).

2. Measuring apparatus as claimed in Claim 1, characterised in that the optical shield (8) is arranged between the laser transmitter (9) and the filter chamber (1) which is inserted into the optical beam path of the laser transmitter.

3. Measuring apparatus as claimed in Claim 1 or Claim 2, characterised in that the scattering device (3) is connected after the filter chamber (1) which is inserted into the optical beam path of the laser transmitter (9).

4. Measuring apparatus as claimed in one of Claims 1 to 3, characterised in that the attenuating filters (2) consist of calibrated colour and/or filter glasses.

5. Measuring apparatus as claimed in one of the preceding Claims, characterised in that the optical coupling device (7) consists of a collimator having a beam splitter.

6. Measuring apparatus as claimed in one of the preceding Claims, characterised in that the filter chamber (1), the scattering device (3), the light waveguide (5) and the optical coupling device (7) are designed as independent functional units, each having a separate housing.

7. Measuring apparatus as claimed in one of Claims 1 to 5, characterised in that the scattering device (3), the light waveguide (5) and the optical coupling device (7) are combined in a measuring device having a separate housing.

8. Measuring apparatus as claimed in one of the preceding Claims, characterised in that the optical shield (8) consists of a closed protective tube.

9. Measuring apparatus as claimed in one of the preceding Claims, characterised in that in the scatter region of the scattering disk (4), a photo-element is arranged which is connected to a power measuring electronic unit.

10. Measuring apparatus as claimed in one of the preceding Claims, characterised in that the light waveguide (5) is wound on to a spool (6).

11. Measuring apparatus as claimed in one of the preceding Claims, characterised in that for a plurality of light waveguides coupled into the scattering device (3), the light waveguides have different lengths.

12. Measuring apparatus as claimed in Claim 11, characterised in that the light waveguides are combined to form a common light waveguide by means of an optical coupler.

13. Measuring apparatus as claimed in Claim 11 or Claim 12, characterised in that for two light waveguides, the additional light waveguide has a length such that, because of the additional light waveguide, a length difference is produced corresponding to a specific measuring section.

# FIG 1

# FIG 2